# EUROPEAN PATENT APPLICATION

(11) **EP 4 693 656 A1**
(43) Date of publication of application: **11.02.2026**
(21) Application number: 24780174.9
(22) Date of filing: 25.03.2024
(51) Int. Cl.: H01M 50/242, H01M 50/213, H01M 50/238, H01M 50/262, H01M 50/291, H01M 50/293

(54) **POWER STORAGE MODULE**

(30) Priority: 31.03.2023 JP 2023057946
(71) Applicant: Panasonic Intellectual Property Management Co., Ltd., Kadoma-shi, Osaka 571-0057 (JP)
(72) Inventor: SAWADA, Koichi, Osaka 571-0057 (JP)
(74) Representative: Eisenführ Speiser
(86) International application number: PCT/JP2024/011694
(87) International publication number: WO 2024/204056

(57) **Abstract**

Power storage module (10) includes: a plurality of power storages (20); holder (50) including a plurality of containers (51), in which each of the plurality of power storages (20) is accommodated in a corresponding one of the plurality of containers (51), holder (50) includes skeleton (54) made of a first material and deformation portion (55) made of a second material having a lower strength than a strength of the first material, and deformation portion (55) is disposed along a first direction orthogonal to an axial direction of the power storage (20).

## Description

### TECHNICAL FIELD

The present disclosure relates to a power storage module.

### BACKGROUND ART

A power storage module is used as a power source including a plurality of power storages. The power storage module may be installed in a vehicle. In the in-vehicle power storage module, for example, when an impact load is applied at the time of side collision of the vehicle, the load is applied to the power storage to deform the power storage, which may make the power storage unsafe. For example, PTL 1 discloses a technique for preventing a load from being applied to a power storage by breaking a holder due to a recessed shape provided in the holder at the time of a side collision of a vehicle.

### Citation List

### Patent Literature

PTL 1: Unexamined Japanese Patent Publication No. 2015-156320

### SUMMARY OF THE INVENTION

Not only an in-vehicle power storage module, a power storage module has room for further improvement in safety.

A power storage module according to the present disclosure including: a plurality of power storages; and a holder including a plurality of containers, in which each of the plurality of power storages is accommodated in a corresponding one of the plurality of containers, the holder includes a skeleton made of a first material and a deformation portion made of a second material having a lower strength than a strength of the first material, and the deformation portion is disposed along a first direction orthogonal to an axial direction of the power storage.

According to the power storage module of the present disclosure, safety of the power storage module can be improved.

### BRIEF DESCRIPTION OF THE DRAWINGS

Fig. 1 is a perspective view showing a power storage module which is an example of an exemplary embodiment.
Fig. 2 is an axial cross-sectional view showing a power storage.
Fig. 3 is a perspective view showing a lower holder according to an example of the exemplary embodiment.
Fig. 4 is a plan view showing the lower holder according to an example of the exemplary embodiment.
Fig. 5 is a bottom view showing the lower holder according to an example of the exemplary embodiment.
Fig. 6 is a front view showing the lower holder according to an example of the exemplary embodiment.
Fig. 7 is a diagram for explaining a case where an impact load is applied to the lower holder.

### DESCRIPTION OF EMBODIMENT

Hereinafter, exemplary embodiments of the present disclosure will be described in detail. In the following description, specific shapes, materials, directions, numerical values, etc. are examples illustrated to facilitate understanding of the present disclosure and may be changed as appropriate to suit uses, purposes, specifications, or other requirements.

### [Power Storage Module]

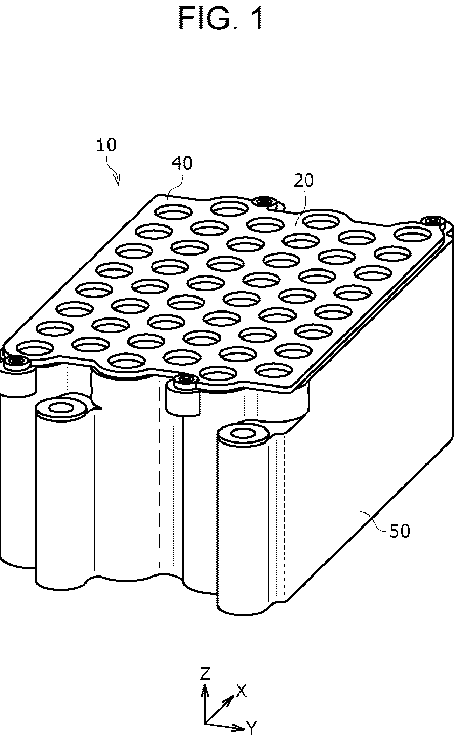

Power storage module 10, which is an example of an exemplary embodiment, will be described with reference to Fig. 1.

Power storage module 10 is installed in an electric vehicle as a power source of a motor that drives the electric vehicle. However, the power storage module of the present disclosure is not limited to installation in an electric vehicle and, for example, may be used as a power source of an electric device driven by a motor such as an electric power tool, an electric power-assisted bicycle, an electric motorcycle, an electric wheelchair, an electric tricycle, or an electric cart. The application of the power storage module of the present disclosure is not limited, and power storage module may be used as a power source of various electric devices used indoors and outdoors, such as a cleaner, a wireless device, a lighting device, a digital camera, and a video camera.

The power storage module of the present disclosure may be provided in a power storage pack. The power storage pack is a power source provided in a vehicle body of an electric vehicle and in which a plurality of power storage modules is disposed in a housing. The power storage module of the present disclosure may also be provided in a vehicle body of a vehicle.

Hereinafter, in power storage module 10, an axial direction of cylindrical power storage 20 to be described later may be referred to as up-and-down direction Z, a direction orthogonal to up-and-down direction Z may be referred to as first direction Y, and a direction orthogonal to up-and-down direction Z and first direction Y may be referred to as second direction X.

Power storage module 10 includes: a plurality of power storages 20;upper holder 40 that holds an upper side of power storage 20 in up-and-down direction Z and is formed of a first material; and lower holder 50 that holds a lower side of power storage 20 in up-and-down direction Z and is formed of the first material.

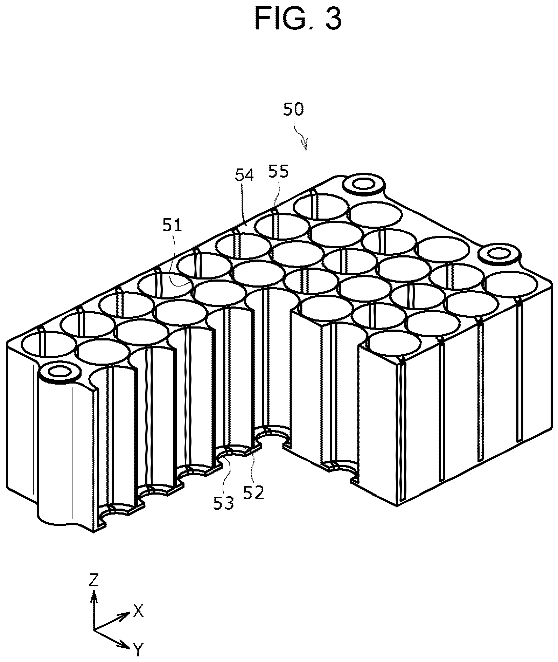

As will be described later in detail, lower holder 50 has a plurality of containers 51 for holding respective power storages 20. In addition, lower holder 50 includes skeleton 54 formed of the first material and deformation portion 55 formed of the second material having lower strength than the first material along first direction Y of power storage 20 (see Fig. 3). According to deformation portion 55, it is possible to improve the safety of power storage module 10 by reducing the load applied to power storage 20 when the impact load is applied to power storage module 10. In the present exemplary embodiment, "deformation portions 55 are formed along first direction Y" means that "the deformation portions are formed so as to be arranged in a zigzag shape as a whole along first direction Y".

Note that each of containers 51 may be configured in skeleton 54 or may be configured by skeleton 54 and deformation portion 55.

### [Power Storage]

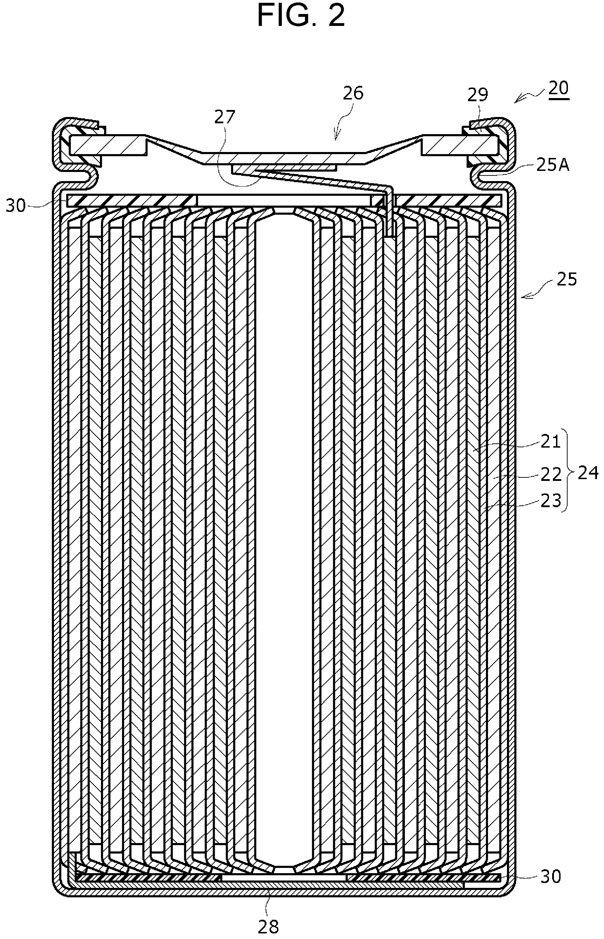

Power storage 20, which is an example of an exemplary embodiment, will be described in detail with reference to Figs. 1 and 2.

As shown in Fig. 1, a plurality of power storages 20 are densely filled in power storage module 10 in consideration of safety, and adjacent power storages 20 are arranged substantially close to each other. In power storage 20, for example, in plan view, six power storages 20 are arranged so as to surround single power storage 20 (or in a staggered arrangement).

As shown in Fig. 2, in this example, a cylindrical lithium ion secondary battery is used as power storage 20, but power storage 20 may be a nickel-metal hydride battery, a capacitor or the like. Power storage 20 includes, for example, electrode group 24 in which strip-shaped positive electrode 21 and strip-shaped negative electrode 22 are wound in with strip-shaped separator 23 interposed therebetween, cylindrical exterior can 25 containing electrode group 24 together with an electrolyte solution, sealing body 26 sealing an opening of exterior can 25 in an insulated state, foil-shaped positive electrode lead 27 electrically connecting a positive electrode 21 and sealing body 26, and negative electrode lead 28 electrically connecting negative electrode 22 and exterior can 25. Insulating gasket 29 may be disposed between an outer periphery of sealing body 26 and an inner peripheral face of the opening of exterior can 25.

Exterior can 25 is provided in its outer peripheral face close to the opening part with groove 25A in an annular shape. Groove 25A is formed as an annular protrusion on the inner peripheral face of exterior can 25. Gasket 29 and sealing body 26 are disposed on the annular protrusion in exterior can 25. Then, an opening end of exterior can 25 is swaged to fall down inward of exterior can 25 while gasket 29 is disposed on an inner peripheral side. Sealing body 26 is sandwiched by the swaged opening end and the protrusion in the axial direction through gasket 29 and thus the opening of exterior can 25 is sealed.

Sealing body 26 is provided with a current interruption mechanism (CID) or an exhaust valve that ruptures when the inside of exterior can 25 reaches predetermined pressure or more. In addition, insulating plate 30 for insulating electrode group 24 from exterior can 25 may be provided between electrode group 24 and the bottom of exterior can 25 or between electrode group 24 and the protrusion (groove 25A). When insulating plate 30 is provided, positive electrode lead 27 may extend through a through-hole formed in insulating plate 30. Negative electrode lead 28 may pass through a through-hole formed in insulating plate 30 or may extend while bypassing insulating plate 30. In power storage 20, as described above, the positive electrode terminal may be formed on the top surface of sealing body 26, and the negative electrode terminal may be formed on the swaged shoulder portion of exterior can 25.

### [Upper Holder]

Upper holder 40 will be described with reference to Fig. 1 again.

As described above, upper holder 40 holds the upper side of each of the plurality of power storages 20. Upper holder 40 may have a container, a skeleton, a deformation portion, and a beam similar to the container, the skeleton, the deformation portion, and the beam of lower holder 50 described later in detail, and may be configured to obtain the same function and effect as lower holder 50, or may be configured to have only the container.

### [Lower Holder]

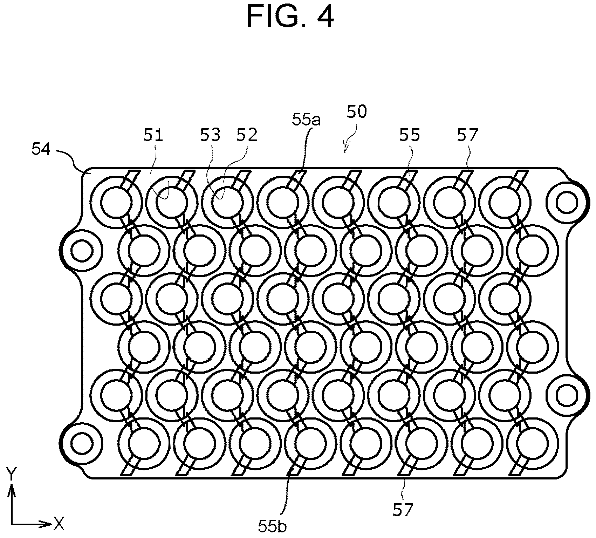

Lower holder 50 as an example of the exemplary embodiment will be described with reference to Figs. 3 to 6.

As described above, lower holder 50 as a holder holds the lower sides of the plurality of power storages 20 by container 51. The length of lower holder 50 in up-and-down direction Z is sufficiently longer than the length of upper holder 40 in up-and-down direction Z. Therefore, as an example, lower holder 50 holds the intermediate portions and the lower portions of the plurality of power storages 20. In the power storage module of the present disclosure, a ratio of a portion where power storage 20 is accommodated in container 51 of lower holder 50 is not particularly limited.

Skeleton 54 of lower holder 50 is made of the first material. PBT-GF, PC, PC-ABS, or the like is used as the first material.

As shown in Fig. 3 to Fig. 5, lower holder 50 includes container 51 which holds power storage 20, deformation portion 55 which is formed in a zigzag shape along first direction Y by a second material having lower strength than the first material, and skeleton 54 formed by the first material. Further, skeleton 54 has first beam 56 extending so as to intersect deformation portion 55. In the following description, it is assumed that an impact load is applied to lower holder 50 from one side (left side in the drawing) in second direction X.

Container 51 is formed as a recess having a columnar cavity when viewed in up-and-down direction Z. Power storage 20 is fitted to container 51. Container 51 is formed such that six containers 51 surround one container 51 in plan view, for example. Alternatively, the plurality of containers may be simply staggered, or the plurality of containers may be arranged at equal intervals vertically and horizontally. Each of containers 51 includes bottom surface portion 52 which opposedly faces a lower end face (bottom surface) of power storage 20, and opening 53 which is formed on bottom surface portion 52 and exposes the bottom surface of power storage 20.

Deformation portion 55 is formed of the second material having lower strength than the first material as described above. As the second material, an elastomer-based material, silicone, or the like is used. Note that the second material may be metal as long as the second material has lower strength than the first material. In lower holder 50, deformation portion 55 is disposed so as to be filled in a through hole or a recess in skeleton 54. When both the first material and the second material are resins, lower holder 50 can be formed by two-color molding. According to this molding method, lower holder 50 can be molded in a state where skeleton 54 and deformation portion 55 are in close contact with each other.

Deformation portion 55 is disposed between a pair of adjacent containers 51 arranged in a zigzag shape along first direction Y. Deformation portion 55 (one end deformation portion 55a) is disposed between one outer surface in first direction Y and container 51 formed at one end in first direction Y as viewed in up-and-down direction Z. Further, deformation portion 55 (other end deformation portion 55b) is also disposed between the other outer surface in first direction Y and container 51 formed at the other end in first direction Y. In other words, when viewed in up-and-down direction Z, deformation portion 55 is formed from one outer surface to the other outer surface of lower holder 50 in first direction Y via adjacent containers 51 arranged along first direction Y. The width of deformation portion 55 is smaller than the radius of container 51 as viewed in up-and-down direction Z. However, the width of deformation portion 55 is not limited to the above definition.

In deformation portion 55 disposed between two containers 51, when viewed in up-and-down direction Z, one end face in the direction in which deformation portion 55 extends may be exposed to the inner peripheral face of one container 51 of two containers 51, and the other end face of deformation portion 55 may be exposed to the inner peripheral face of other container 51 of two containers 51. At this time, one end face and the other end face of deformation portion 55 may form curved surfaces so that the inner peripheral face of each container 51 is formed together with skeleton 54. One of one end face and the other end face of deformation portion 55 may be exposed to the inner peripheral face of container 51.

Further, deformation portion 55 may be formed to extend on bottom surface portion 52 of container 51. At this time, the end of deformation portion 55 formed on bottom surface portion 52 may be connected to the inner peripheral edge of opening 53 and exposed to the inner peripheral face of opening 53. In deformation portion 55 disposed between container 51 disposed at the end and one outer surface of lower holder 50 in first direction Y, when viewed in up-and-down direction Z, one end face in a direction in which deformation portion 55 extends may be exposed to the inner peripheral face of container 51, and the other end face of deformation portion 55 may be exposed to the one outer surface. deformation portion 55 may be exposed only on one of the outer surface of lower holder 50 and the inner peripheral face of container 51.

As a result, when an impact load is applied from one side in second direction X, deformation portion 55 can absorb the impact load by compression fracture (compression, crushing, and deformation). Although container 51 is reduced in size, deformation of power storage 20 is suppressed. As a result, it is possible to prevent power storage 20 from being brought into an unsafe state.

The deformation portion of the present disclosure is not limited to deformation portion 55 of the present exemplary embodiment, and may be formed to extend in a direction in which an assumed direction in which an impact load is applied and a direction in which the deformation portion is formed are orthogonal to each other when viewed in up-and-down direction Z. For example, when it is assumed that an impact load is applied from one side in first direction Y, power storage module 10 may be disposed such that deformation portion 55 is formed along second direction X.

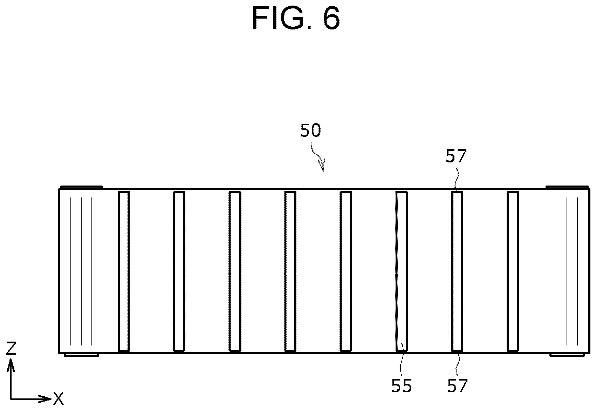

As illustrated in Fig. 6, deformation portion 55 extends from the upper end to the lower end along up-and-down direction Z when viewed in first direction Y. Note that second beams 57, which will be described in detail later, are formed at the upper end and the lower end of deformation portion 55 disposed at both ends in first direction Y.

As illustrated in Figs. 3 to 5 again, the two deformation portions 55 are connected to container 51 as viewed in up-and-down direction Z. In addition, the two deformation portions 55 connected to container 51 are connected to positions at approximately 60° with respect to second direction X on the other side in second direction X as viewed in up-and-down direction Z. In other words, in power storage 20, as viewed in up-and-down direction Z, a portion at approximately 240° on one side in second direction X is held by skeleton 54 made of the first material having higher strength than the second material.

With such a configuration, when an impact load is applied to power storage 20 from one side in second direction X, the deformation of power storage 20 can be suppressed by holding the one side in second direction X of power storage 20 without the deformation of the portion of approximately 240° on the one side in second direction X of the power storage 20. As a result, it is possible to prevent power storage 20 from being brought into an unsafe state.

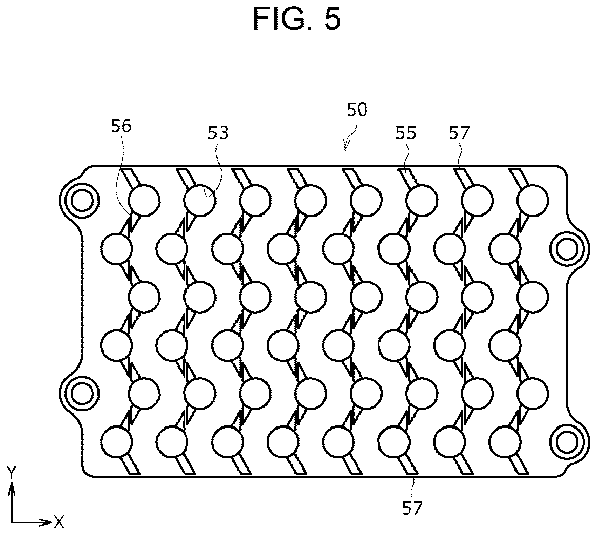

As illustrated in Fig. 5, first beam 56 of skeleton 54 is formed to extend along first direction Y so as to intersect deformation portion 55 at the lower end portion in up-and-down direction Z. first beam 56 constitutes a part of the outer bottom surface of lower holder 50. More specifically, first beam 56 is formed so as to divide deformation portion 55 formed in a zigzag shape along first direction Y in second direction X at the lower end portion in up-and-down direction Z. As a result, the portion of lower holder 50 where deformation portion 55 is formed is reinforced by first beam 56, and the shape of lower holder 50 at the normal time can be maintained.

The width of first beam 56 is sufficiently smaller than the width of deformation portion 55. Note that, although details will be described later, when an impact load is applied to lower holder 50, first beam 56 is damaged before deformation portion 55 is compressively broken. The first beam of the present disclosure is not limited to first beam 56 of the present exemplary embodiment, and may be formed so as to intersect deformation portion 55 along first direction Y similarly to deformation portion 55. Note that the width of first beam 56 and the number of first beams 56 with respect to one deformation portion 55 are not limited to those described above. A plurality of first beams 56 may be provided for one deformation portion 55. At this time, the deformation portions may be arranged at predetermined intervals in up-and-down direction Z. A part of first beam 56 may constitute bottom surface portion 52 of container 51. With this configuration, the adjacent bottom surface portions 52 can be connected by first beam 56, and the strength as skeleton 54 is improved.

As illustrated in Figs. 3 to 6, second beam 57 of skeleton 54 is disposed at both ends in first direction Y, and is formed to extend along second direction X so as to intersect deformation portion 55 at both ends in up-and-down direction Z and both ends in first direction Y. As a result, second direction X of lower holder 50 can be reinforced by second beam 57, and the shape of lower holder 50 at the normal time can be maintained. The width of second beam 57 is sufficiently smaller than the width of deformation portion 55. Note that, although details will be described later, when an impact load is applied to lower holder 50, second beam 57 is damaged before deformation portion 55 is compressively broken.

The second beam of the present disclosure is not limited to second beam 57 of the present exemplary embodiment, and may be formed along second direction X so as to intersect with deformation portion 55 as viewed in up-and-down direction Z. Second beam 57 may be formed only at the upper end or the lower end in up-and-down direction Z. Second beam 57 may be formed only at one end portion or the other end in first direction Y.

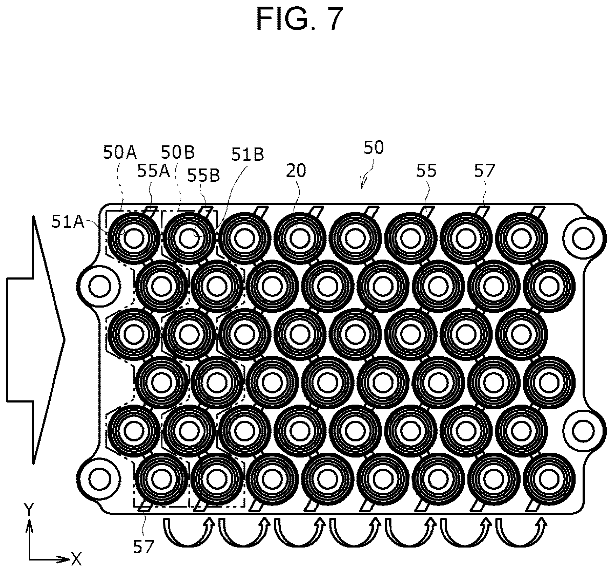

A case where an impact load is applied to lower holder 50 will be described with reference to Fig. 7.

As described above, when an impact load is applied to lower holder 50 from one side (left side in the plane of drawing) in second direction X, the impact load is applied to one outer surface of lower holder 50 in second direction X. At this time, first beam 56 and second beam 57 intersecting deformation portion 55 (hereinafter, deformation portion 55A in the first row) formed at one end of lower holder 50 in second direction X are damaged, and deformation portion 55A in the first row is compressively destroyed.

The impact load can be absorbed by the compressive fracture of deformation portion 55A in the first row. In addition, although container 51 (hereinafter, container 51A in the first row) formed at the farthest end in second direction X is reduced by the compressive failure of deformation portion 55A in the first row, power storage 20 in the first row is merely slightly deformed, and it is suppressed that power storage 20 in the first row is brought into an unsafe state.

As described above, due to the compressive fracture of deformation portion 55A in the first row and the reduction of container 51A in the first row, region 50A where container 51A in the first row is formed absorbs a part of the impact load while enduring the impact load, and the impact load is transmitted to region 50B where container 51B in the second row is formed. At this time, similarly to the first row, first beam 56 and second beam 57 reinforcing deformation portion 55B in the second row are damaged, deformation portion 55B in the second row is compressed and destroyed, and container 51B in the second row is reduced. Similarly to the first row, the impact load is absorbed, and the deformation of power storage 20 in the second row is suppressed.

Further, due to the compressive fracture of deformation portion 55B in the second row and the reduction of container 51B in the second row, region 50B where container 51B in the second row is formed absorbs a part of the impact load while enduring the impact load, and the impact load is transmitted to the region where container 51 in the third row is formed. As described above, in each row, the region where container 51 is formed due to the compressive fracture of deformation portion 55 and the reduction of container 51 can absorb a part of the impact load and withstand the impact load, and the entire lower holder 50 can absorb the impact load.

As a result, according to lower holder 50, the impact load when the impact load is applied is absorbed by lower holder 50, the deformation of each power storage 20 is suppressed, and the unsafe state of each power storage 20 is suppressed. As a result, the safety of power storage module 10 can be improved.

The present disclosure is further described by the following exemplary embodiments.

Configuration 1: A power storage module including: a plurality of power storages; and a holder including a plurality of containers, in which each of the plurality of power storages is accommodated in a corresponding one of the plurality of containers, the holder includes a skeleton made of a first material and a deformation portion made of a second material having a lower strength than a strength of the first material, and the deformation portion is disposed along a first direction orthogonal to an axial direction of the power storage.

Configuration 2: The power storage module according to Configuration 1, in which the plurality of containers include a first container and a second container adjacent to the first container, the first container and the second container are arranged in the first direction, and the deformation portion is disposed between the first container and the second container.

Configuration 3: The power storage module according to Configuration 2, in which one end face of the deformation portion is exposed to the inner peripheral face of the first container, and the other end face of the deformation portion is exposed to an inner peripheral face of the second container.

Configuration 4: The power storage module according to any one of Configurations 1 to 3, in which the holder further includes a one end deformation portion made of the second material having a lower strength than a strength of the first material and an other end deformation portion made of the second material having a lower strength than a strength of the first material, the one end deformation portion is disposed between a first outer surface of the holder and a third container provided at one end of the plurality of containers, and the other end deformation portion is disposed between an other outer surface of the holder and a fourth container formed at the other end of the plurality of containers.

Configuration 5: The power storage module according to Configuration 4, in which one end face of the one end deformation portion is exposed to the first outer surface, other end face of the one end deformation portion is exposed to an inner peripheral face of the third container, and one end face of the other end deformation portion is exposed to the other outer surface, and the other end face of the other end deformation portion is exposed to an inner peripheral face of the fourth container.

Configuration 6: The power storage module according to any one of Configurations 1 to 5, further including a plurality of deformation portions, in which each of the plurality of deformation portions is the deformation portion, and two corresponding deformation portions among the plurality of deformation portions are disposed around each of the plurality of containers.

Configuration 7: The power storage module according to Configuration 6, in which the two deformation portions are connected to corresponding one of the plurality of containers so as to be positioned at approximately 60° with respect to an axial direction of the power storage and a second direction orthogonal to the first direction.

Configuration 8: The power storage module according to any one of Configurations 1 to 7, the skeleton includes a first beam extending along the first direction so as to intersect the deformation portion.

Configuration 9: The power storage module according to Configuration 8, in which the first beam is formed at at least one end portion of the power storage in the axial direction.

Configuration 10: The power storage module according to any one of Configurations 1 to 9, the skeleton includes a second beam extending along the second direction so as to intersect the deformation portion.

Configuration 11: The power storage module according to Configuration 10, in which the second beam is formed at at least one end portion in the first direction.

Configuration 12: The power storage module according to Configuration 10 or 11, in which the second beam is formed at at least one end portion of the power storage in the axial direction.

Configuration 13: The power storage module according to any one of Configurations 1 to 12, in which the first material and the second material are resins.

Note that the present disclosure is not limited to the above-described exemplary embodiment and modified examples thereof, and it is a matter of course that various changes and improvements can be made within the scope of the content described in the claims of the present application.

### REFERENCE MARKS IN THE DRAWINGS

- 10: power storage module
- 20: power storage
- 21: positive electrode
- 22: negative electrode
- 23: separator
- 24: electrode group
- 25: exterior can
- 25A: groove
- 26: sealing body
- 27: positive electrode lead
- 28: negative electrode lead
- 29: gasket
- 30: insulating plate
- 40: upper holder
- 50: lower holder
- 50A: first row region
- 50B: second row region
- 51: container
- 52: bottom surface
- 53: opening
- 54: skeleton
- 55: deformation portion
- 55a: one end deformation portion
- 55b: other end deformation portion
- 56: first beam
- 57: second beam
- X: second direction
- Y: first direction
- Z: up-and-down direction

## Claims

1. A power storage module comprising:
a plurality of power storages; and
a holder including a plurality of containers,
wherein each of the plurality of power storages is accommodated in a corresponding one of the plurality of containers,
the holder includes
a skeleton made of a first material and
a deformation portion made of a second material having a lower strength than a strength of the first material, and
the deformation portion is disposed along a first direction orthogonal to an axial direction of the power storage.

2. The power storage module according to Claim 1, wherein
the plurality of containers include a first container and a second container adjacent to the first container,
the first container and the second container are arranged in the first direction, and
the deformation portion is disposed between the first container and the second container.

3. The power storage module according to Claim 2, wherein
one end face of the deformation portion is exposed to an inner peripheral face of the first container, and
an other end face of the deformation portion is exposed to the inner peripheral face of the second container.

4. The power storage module according to any one of Claims 1 to 3, wherein
the holder further includes a one end deformation portion made of the second material having a lower strength than a strength of the first material and an other end deformation portion made of the second material having a lower strength than a strength of the first material,
the one end deformation portion is disposed between a first outer surface of the holder and a third container provided at one end of the plurality of containers, and
the other end deformation portion is disposed between an other outer surface of the holder and a fourth container formed at an other end of the plurality of containers.

5. The power storage module according to Claim 4, wherein
one end face of the one end deformation portion is exposed to the first outer surface, and an other end face of the one end deformation portion is exposed to an inner peripheral face of the third container, and
one end face of the other end deformation portion is exposed to the other outer surface, and an other end face of the other end deformation portion is exposed to an inner peripheral face of the fourth container.

6. The power storage module according to any one of Claims 1 to 5, further comprising a plurality of deformation portions, wherein
each of the plurality of deformation portions is the deformation portion, and
two corresponding deformation portions among the plurality of deformation portions are disposed around each of the plurality of containers.

7. The power storage module according to Claim 6, wherein the two corresponding deformation portions are connected to corresponding one of the plurality of containers so as to be positioned at approximately 60° with respect to an axial direction of the power storage and a second direction orthogonal to the first direction.

8. The power storage module according to any one of Claims 1 to 7, wherein the skeleton includes a first beam extending along the first direction so as to intersect the deformation portion.

9. The power storage module according to Claim 8, wherein the first beam is formed at at least one end portion of the power storage in the axial direction.

10. The power storage module according to any one of Claims 1 to 9, wherein the skeleton includes a second beam extending along the second direction so as to intersect the deformation portion.

11. The power storage module according to Claim 10, wherein the second beam is formed at at least one end portion in the first direction.

12. The power storage module according to Claim 10 or 11, wherein the second beam is formed at at least one end portion of the power storage in the axial direction.

13. The power storage module according to any one of Claims 1 to 12, wherein the first material and the second material are resins.
